# EUROPEAN PATENT SPECIFICATION

(11) **EP 1 691 304 B1**
(45) Date of publication and mention of the grant of the patent: **12.11.2008**
(21) Application number: 05002719.2
(22) Date of filing: 09.02.2005
(51) Int. Cl.: G06F 17/30, G06F 9/445

(54) **Method for displaying display information**
Verfahren zum Anzeigen von Anzeigeinformationen
Procédé pour afficher information d'affichage

(43) Date of publication of application: 16.08.2006
(73) Proprietor: SONY UNITED KINGDOM LIMITED, Weybridge, Surrey KT13 0XW (GB)
(72) Inventor: Fuchs, Michael, 80802 München (DE); Machacek, Marek, 81927 München (DE)
(74) Representative: Müller - Hoffmann & Partner

(56) References cited:
- US-A1- 2002 016 909
- US-A1- 2004 148 596
- US-B1- 6 373 498
- US-B1- 6 405 309
- US-B1- 6 578 142
- US-B1- 6 711 688

## Description

The present invention relates to a method for displaying display information via a start up screen and/or via a shut down screen of a display means of a customer device. More particularly the present invention relates to a method for generating a dynamic start up screen and/or a dynamic shut down screen.

When an electronic customer device is started or powered up, certain initializing procedures are performed. The time period during which the initializing procedures are performed is called start up phase. During such a start up phase a normal operation of the electronic customer device is not possible. The same holds for the so-called shut down phase, during which the normal operation is terminated and the given electronic customer device is shut down and for instance set into a standby mode.

In order to inform the user or customer that the electronic customer device is working but still in a power up or shut down phase and not ready for user desired operation a start up screen or a shut down screen with respective display information is optically represented via a given display means. Nowadays the period of time for starting up or shutting down the system of the electronic customer device is used in order to display some useful information to the user or the operating person.

US 6,373,498 B1 discloses displaying of images during boot-up and shut-down of a computer system. An image having an image formate compatible with the operating system is obtained from an external server based on information gathered from the user's computer and/or system provided to the external server. The content sent to the user computer or display is e.g. information regarding the availability of hardware and third party products or services between which the user is able to make one or more choices and requests transferal or purchase of selected products.

It is an object of the present invention to provide a method for displaying such display information via a start up screen and/or via a shut down screen of a display means of an electronic customer device which is more flexible with respect to the information content of the display information to be displayed.

The object underlying the present invention is achieved by a method for displaying display information according to the features of independent claim 1. Preferred embodiments of the inventive method for displaying display information are within the scope of the dependent sub-claims. The object underlying the present invention is also achieved by an apparatus, by an electronic customer device, by a computer program product, as well as by a computer readable storage medium according to the features of claims 17, 19, 20 and 21, respectively.

According to the present invention, a method for displaying display information is provided. The method for displaying display information according to the present invention is in particular adapted in order to for display display information via a start up screen and/or via a shut down screen of a display means of an electronic customer device. The method for displaying display information according to the present invention comprises steps of (A) providing primary information data, of (B) generating from said primary information data, secondary information data which are one of descriptive and representative for said display information to be displayed, and of (C) displaying on a start up screen and/or on a shut down screen at least said display information as said secondary information data or as a derivative thereof, wherein said step (A) of providing said primary information data is realized by at least - in particular passively - receiving said primary information data by said electronic customer device from an external data source outside said electronic customer device and wherein said step (B) of generating said secondary information data and said said display information is - in particular actively - realized inside or internal of said given electronic customer device.

It is therefore a key idea of the present invention to provide the necessary primary information data with respect to the electronic customer device in a passive manner, i.e. by a pure receiving step passively realized by the customer device which is accompanied by a respective active transmission or pushing process of data from and by the data source on the other side. Another key aspect of the present invention is that after having received the primary information data the process of evaluating the amount of primary information data and therefore the process of rendering and generating secondary information data and thereby of rendering the display information to be displayed are realized in an active manner inside the customer device. This is in strict contrast to known methods of displaying display information via start up screens or via shut down screens. In the known cases, the primary information data remain outside the customer device where the primary information data are evaluated and the respective secondary information data and therefore the display information is rendered and where the display information is then subjected to a transmission process in order to provide the finalized display information to the customer device in order to have it displayed by means of a respective display means of the customer device.

The content which is transmitted or pushed in step (A) is preferably localized in or to a network where the respective content is transmitted or pushed.

Usage of different OSD engines from different customer divices - of e.g. different models, brands, user preferences etc. - may or will in general lead to different secondary information data, display information and therefore to different start up and/or shut down screens even if the transmitted and pushed primary information data are in part or in complete the same or are comparable with respect to each other.

Preferably, said step (A) of providing said primary information data may be realized by - in particular actively by said data source - transmitting or pushing said primary information data from said data source to said given electronic customer device.

Additionally or alternatively, a non-bidirectional - e.g. a uni-directional - communication channel is used in or for said step (A) of providing said primary information data according to a preferred embodiment of the method for displaying display information according to the present invention.

Said step (A) of providing said primary information data may additionally or alternatively be performed according to a preferred embodiment of the method for displaying display information according to the present invention in one or an arbitrary plurality of circumstances of the group consisting of:
- in a stand by mode of said electronic customer device,
- in a partial or complete wake up mode of said given electronic customer device,
- at repeated instances of time,
- at predetermined instances of time,
- at periodical instances of time, and
- overnight.

The respective communication channel in or for said step (A) of providing said primary information data may further may additionally or alternatively be realized according to an advantageous embodiment of the method for displaying display information according to the present invention completely or in part by one or an arbitrary plurality of circumstances of the group consisting of:
- terrestrially,
- via cable,
- via air or wirelessly,
- via satellite,
- via a network,
- via a home network, and
- via the internet.

Additionally or alternatively, according to a further preferred embodiment of the method for displaying display information according to the present invention said communication channel in or for said step (A) of providing said primary information data may be realized completely or in part by a analogue broadcasting service.

Further additionally or alternatively, according to a further advantageous embodiment of the method for displaying display information according to the present invention said communication channel in or for said step (A) of providing said primary information data is realized completely or in part by a digital broadcasting service.

In addition or as a further alternative, said step (B) of generating said secondary information data may be performed in one or arbitrary plurality of circumstances of the group consisting of:
- in a stand by mode of said electronic customer device,
- in a partial or complete wake-up mode of said given electronic customer device,
- at repeated instance of time,
- at predetermined instance of time,
- at periodical instance of time, and
- overnight.

Said step (B) of generating said secondary information data may additionally or alternatively one of being a process or comprising a process of generating an image to be displayed as said display information as said or on said start up screen or shut down screen or as a part thereof in accordance with a further embodiment of the method for displaying display information according to the present invention.

Said secondary information data may further may additionally or alternatively be or comprise an image to be displayed as said display information as said or on said start up screen or shut down screen or as a part thereof in accordance with a preferred embodiment of the method for displaying display information according to the present invention.

As an addition or as an alternative, in the latter two cases said image to be displayed as said display information as said or on said start up screen or shut down screen or as a part thereof, one of may be or may be represented or given by or as a bit map file in accordance with a further additional or alternative preferred embodiment of the method for displaying display information according to the present invention.

Said step (B) of generating said secondary information data and therefore the content of said display information and of said image to be displayed may further additionally or alternatively be based on predetermined user profile data which are one of representative or descriptive for user preferences with respect to said display information to be displayed in step (C) in accordance with a further additional or alternative embodiment of the method for displaying display information according to the present invention.

Additionally or alternatively, said step (B) of generating said secondary information data may be performed by involving an existing on screen display engine of said given electronic customer device in accordance with a further embodiment of the method for displaying display information according to the present invention.

Further additionally or alternatively and according to a further advantageous embodiment of the method for displaying display information according to the present invention, said step (B) of generating said secondary information data may be performed using one or an arbitrary plurality of information sources of the group consisting of:
- electronic program guide (EPG),
- weather,
- news,
- stocks,
- sports results,
- messages, in particular email, SMS, MMS,
- reminders,
- notes,
- advertisements,
- remote recordings,
- what is on TV,
- daily tip,
- genre tip,
- subscription reminders,
- customer relationship management,
- announcement of firmware updates,
- new devices,
- archived recordings during night, and
- pictures from a user repository.

Consequently, said secondary user information data and in particular a provided image for said display information may additionally or alternative contain one or an arbitrary plurality of the group consisting of:
- electronic program guide (EPG),
- weather,
- news,
- stocks,
- sports results,
- messages, in particular email, SMS, MMS,
- reminders,
- notes,
- advertisements,
- remote recordings,
- what is on TV,
- daily tip,
- genre tip,
- subscription reminders,
- customer relationship management,
- announcement of firmware updates,
- new devices,
- archived recordings during night, and
- pictures from a user repository.

As a further alternative or in addition, said secondary information data and in particular said image for said display information may be acoustically enhanced by one of containing or by being accompanied by one or an arbitary plurality of sound, music, and speech, which are to be acoustically presented during step (C) of displaying said display information on said start up screen and/or said shut down screen.

Said secondary information data may further additionally or alternatively be essentially representative for a graphical user interface to be displayed after finalizing a start up and before beginning a shut down of the given electronic customer device.

In said step (C) of displaying said display information on said start up screen said start up screen may be alternatively or additionally be made interactive after finalizing the start up phase of the given electronic customer device. E.g. selection of an information item on an interactive start up screen may lead the user, customer or consumer to further information items which are related to said selected information item.

According to a further aspect of the present invention an apparatus is provided for controlling the display of display information - in particular via a start up screen and/or via a shut down screen of a display means of a customer device - which is adapted and/or arranged and which comprises means for realizing a method for displaying display information according to the present invention.

Additionally, according to a further aspect of the present invention an electronic customer device is provided which is adapted and/or arranged and which comprises means in order to realize or participate in a method for displaying display information according to the present invention - in particular via a start up screen and/or via a shut down screen of a display means of said customer device.

Preferably, the inventive electronic customer device may be one of the group consisting of:
- a video recorder, e.g. a PVR having for example a mass storage device, such as a hard disk or an optical disk,
- a DVD player,
- a DVD recorder,
- a TV set or television receiver,
- a personal digital assistant,
- a digital camera,
- a digital broadcast receiver,
- a satelite receiver,
- a mobile device, e.g. a cell phone,
- a pocket computer, and
- a personal computer.

Still additionally, according to a further aspect of the present invention a computer program product is provided comprising computer program means which is adapted and/or arranged in order to realize a method for displaying display information according to the present invention - in particular via a start up screen and/or via a shut down screen of a display means of a customer device according - when it is executed on a computer or a digital signal processing means.

According to a further aspect of the present invention a computer readable storage medium is provided comprising a computer program product according to the present invention.

These and further aspects of the present invention will be further discussed in the following:

The present invention inter alia relates to a dynamic start up screen.

Most people are aware of common and non-informative boot up screens presented during the initialization phase of PC and CE devices. These screens are presented to show that the device is in some way active but yet not ready to fulfill its functions. Because of the need for error display the graphics hardware is always booted up at a very early stage and is therefore able to present the start up screen during the rest of the hardware is booted. The image for the start up screen is stored in a permanent memory preferably in flash memory to be accessed before external medias are booted.

To avoid these non-informative start up screens a technique is proposed where valuable information is downloaded preferably during standby time and an image is rendered using the standard OSD engine according to user preferences

Known start up screens are static to avoid consuming processing power, they are used to identify model brand and software versions and they are mainly bitmaps which can be easily displayed by the graphics chipset.

The following one or an arbitrary plurality of aspects can be realized according to the present invention:
- The use the power up time of the different hardware components to display valuable information.
- The information has to be compiled before the device is started.
- The information has different sources.
- The start up screen is preferably user customizable.
- The start up screen uses preferably the implemented OSD or on screen display engine to render the image for the start up screen.

Additionally or alternatively, the following one or an arbitrary plurality of aspects can be realized according to the present invention:
- The start up screen is an image which can be easily displayed after graphics chipset is powered up.
- The start up screen is preferably stored in flash memory.
- The start up screen is displayed for a reasonable time at least as long as the different hardware components need to power up.
- The start up screen is compiled after downloading service information.
- The downloading of service information is preferably done during a wakeup cycle in the standby mode of the device.
- The wakeup cycle does not necessarily power up all hardware chipsets.
- Devices are TV-sets, set top boxes, recorders, streaming devices, PC and mobile devices.
- The information displayed in the start up screen is extracted from a broadcasting stream or an internet connection or a local area network or local storage of the device.
- There is no need for a bi-directional communication in case of broadcasting devices.
- The information provided to the device could be related to a user profile stored on a server.
- The information extracted by the device could by filtered according to a user profile stored on the device.
- The information extracted by the device could by filtered according to a device address stored in the device.
- The sources for information could be an EPG or other data service which could be downloaded in the night.
- Every information source is displayed in a separate field of the start up screen.
- The start up screen contains at least one field.
- The size and position of the fields are preferably customizable by user and/or service provider.
- The information displayed in the fields is preferably customizable in respect to the content source and selection criteria.
- The start up screen is not interactive during boot up time.
- The start up screen is preferably becoming interactive after boot up.
- The start up screen is preferably rendered using the OSD display or on screen display engine of the device.
- Content sources are: EPG, Weather, News, Stocks, Sport results, Messages (email, SMS, MMS), Reminders, Notes, Advertisements, Remote Recordings, What's on TV, Daily Tip, Genre Tip, Subscription reminders, customer relationship management, announcement of firmware updates or new devices, archived recordings during the night, pictures from a user repository.
- As an enhancement music or voice messages could be presented during boot up screen display.
- As an enhancement the boot screen could be animated.
- The boot up screen could also be displayed as a screen saver, e.g. suitable for plasma displays.
- The start up screen could also be displayed after power down was initiated by the user, e.g. display sponsorship banner.

According to the present invention the start up time can be used to provide valuable information and to reduce the subjective waiting time. Additional revenue schemes for TV channels, device manufacturers and service providers can be implemented.

The invention will now be explained based on preferred embodiments thereof and by taking reference to the accompanying and schematic figures.
- **Fig. 1**: is a schematic block diagram which shows an arrangement to which an embodiment of a method for displaying display information according to the present invention can be applied.
- **Fig. 2**: is schematic flow chart illustrating an embodiment of a method for displaying display information according to the present invention.
- **Fig. 3**: is a schematic block diagram which demonstrates a display situation according to a preferred embodiment of a method for displaying display information according to the present invention.
- **Fig. 4**: is a schematic block diagram which demonstrates a display situation according to a further preferred embodiment of a method for displaying display information according to the present invention.

In the following functional and structural similar or equivalent element structures will be denoted with the same reference symbols. Not in each case of their occurrence a detailed description will be repeated.

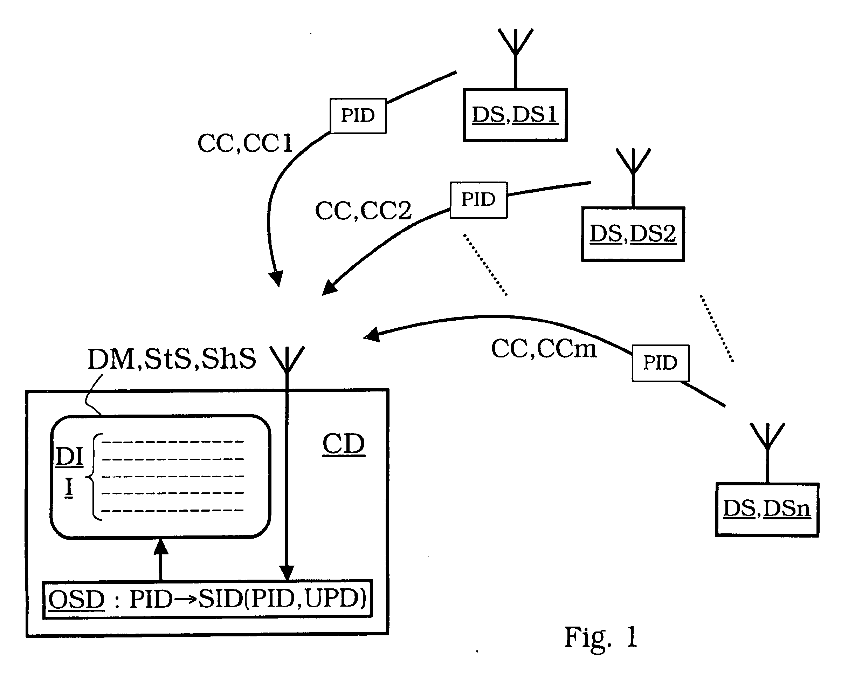

Fig. 1 is a schematic block diagram which shows an arrangement to which an embodiment of a method for displaying display information DI according to the present invention can be applied.

The arrangement of Fig. 1 consists of an electronic customer device CD having display means DM for displaying display information DI which is given by an image I and of a plurality or variety of different or comparable data sources DS, DS1, ... , DSm which may be connected to said electronic customer device CD via a plurality or a variety of different or comparable communication channels CC, CC1, ..., CCn. The display information DI to be displayed on said display means DM is based on secondary information data SID which are derived from primary information data PID within said electronic customer device CD in an active manner by using a so called on screen display engine or OSD engine OSD contained therein. Said primary information data PID are received in a passive manner by said electronic customer device CD. The generation of said secondary information data SID of therefore of said display information DI and consequently of said image I to be displayed on said display means DM as a start up screen StS or as a shut down screen ShS is based on user preference data UPD being descriptive for the information content and display style preferred by a user of said electronic customer device CD. There may exist a variety of different or comparable communication channels CC, CC1, ..., CCn to one or to a variety of different or comparable data sources DS, DS1, ..., DSm.

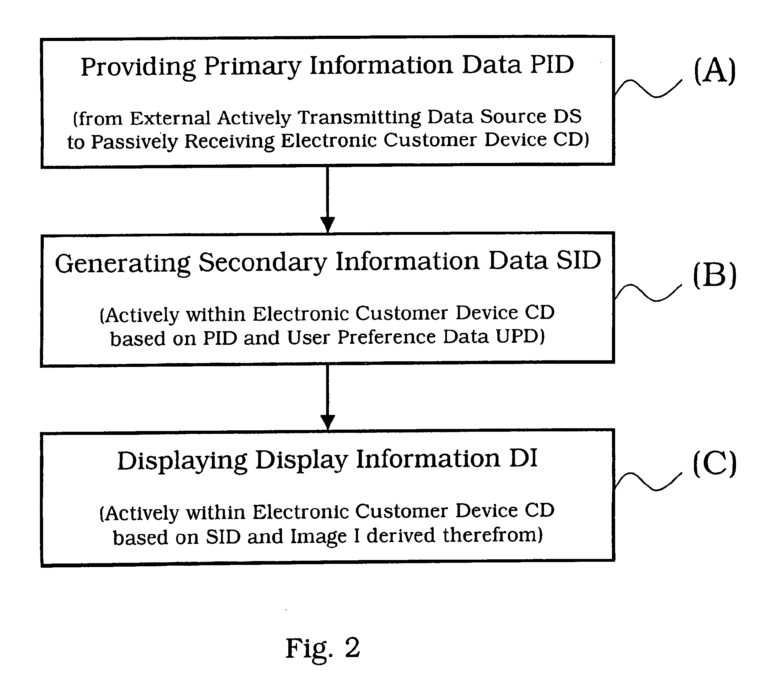

Fig. 2 is schematic flow chart illustrating an embodiment of a method for displaying display information according to the present invention.

According to a first step (A) primary information data PID are provided. This is done by actively transmitting said primary information data PID by and from a data source DS to a passively receiving electronic customer device CD.

In a following step (B) secondary information data SID are generated from said primary information data PID. This is done actively within said electronic customer device CD in an active manner by taking into account user preference data UPD which might be learned and/or which might be obtained from some data base. Thereby, said display information DI or a corresponding image I might be derived.

In a following step (C) said display information DI or a corresponding image are actively displayed on display means DM of said electronic customer device CD during a start up and/or during a shut down phase of said electronic customer device CD.

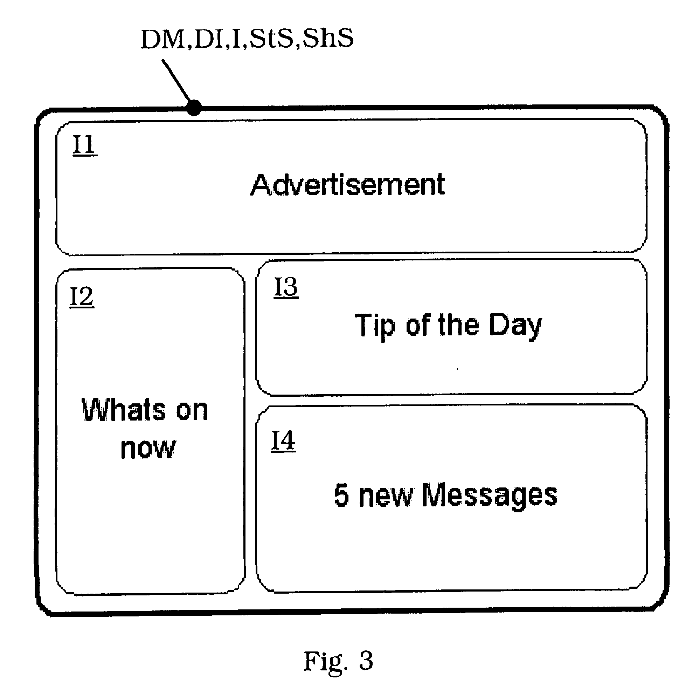

Fig. 3 is a schematic block diagram which demonstrates a display situation according to a preferred embodiment of a method for displaying display information DI according to the present invention. On a display means DM of an electronic customer device CD an image I corresponding to display information DI to display as or on an start up screen StS or shut down screen ShS is formed as a superposition of partial images I1 to I4 corresponding to different information contents, e.g. advertisement, what is on TV, tip of the day, and new messages.

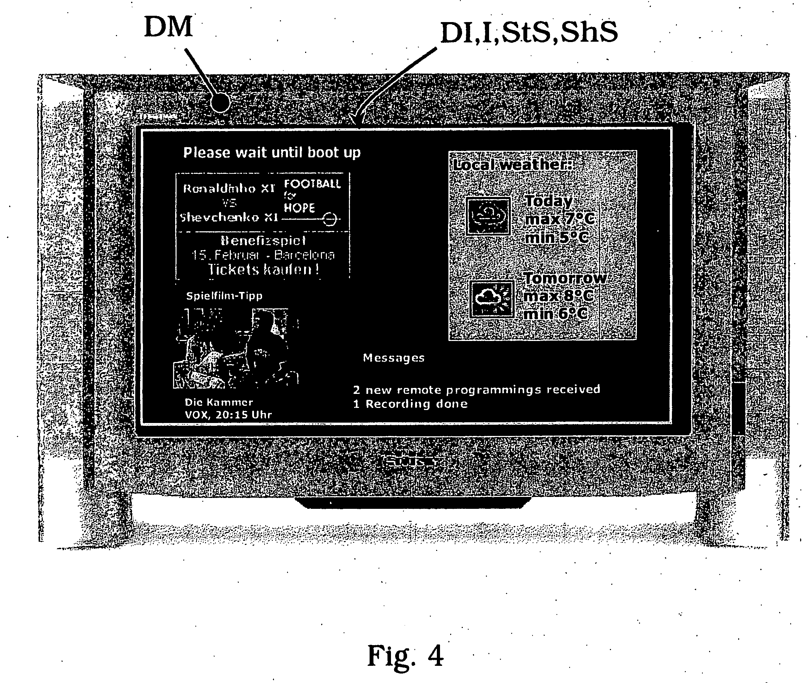

Fig. 4 is a schematic but more illustrative block diagram which demonstrates a display situation according to a further preferred embodiment of a method for displaying display information DI according to the present invention. Again, on a display means DM of an electronic customer device CD an image I corresponding to display information DI to display as or on an start up screen StS or shut down screen ShS is formed as a superposition of certain partial images corresponding to different information contents.

### Reference Symbols

- **CC**: Communication channel
- **CC1, ..., CCm**: Communication channel
- **CD**: Electronic customer device
- **DI**: Display information
- **DM**: Display means
- **DS**: Data source
- **DS1, ..., DSn**: Data source
- I: image
- **I1, ..., 14**: Partial image
- **PID**: Primary information data
- **SID**: Secondary information data
- **ShS**: Shut down screen
- **StS**: Start up screen
- **UPD**: User preference data

## Claims

1. Method for displaying display information (DI),
via a start up screen (StS) and/or via a shut down screen (ShS) of a display means (DM) of an electronic customer device (CD),
**characterized by** the following steps:
(A) receiving primary information data (PID) by at least passively receiving said primary information data (PID) by said electronic customer device (CD) from a data source (DS) external to said electronic customer device (CD),
(B) generating from said primary information data (PID) secondary information data (SID) which are one of descriptive and representative for said display information (DI) to be displayed, actively within said electronic customer device (CD), and
(C) displaying on a start up screen (StS) and/or on a shut down screen (ShS) at least said display information (DI) as said secondary information data (SID) or as a derivative thereof

2. Method according to claim 1,
wherein said step (A) of providing said primary information data (PID) is realized by actively transmitting or pushing said primary information data (PID) from said data source (DS) to said electronic customer device (CD).

3. Method according to any one of the preceding claims,
wherein a an uni-directional communication channel (CC) is used in or for said step (A) of providing said primary information data (PID).

4. Method according to any one of the preceding claims,
wherein said step (A) of providing said primary information data (PID) is performed in one or an arbitrary plurality of circumstances of the group consisting of:
- in a stand by mode of said electronic customer device (CD),
- in a partial or complete wake up mode of said electronic customer device (CD),
- at repeated instances of time,
- at predetermined instances of time,
- at periodical instances of time, and
- overnight.

5. Method according to any one of the preceding claims,
wherein said communication channel (CC) in or for said step (A) of providing said primary information data (PID) is realized completely or in part by one or an arbitrary plurality of circumstances of the group consisting of:
- terrestrially,
- via cable,
- via air or wirelessly,
- via satellite,
- via a network,
- via a home network, and
- via the internet.

6. Method according to any one of the preceding claims,
wherein said step (B) of generating said secondary information data (SID) is performed in one or arbitrary plurality of circumstances of the group consisting of:
- in a stand by mode of said electronic customer device (CD),
- in a partial or complete wake-up mode of said given electronic customer device (CD),
- at repeated instance of time,
- at predetermined instance of time,
- at periodical instance of time, and
- overnight.

7. Method according to any one of the preceding claims,
wherein said step (B) generating said secondary information data (SID) one of is or comprises a process of generating an image (I) to be displayed as said display information (DI) as at least a part of said start up screen (StS) or shut down screen (ShS).

8. Method according to any one of the preceding claims,
wherein said secondary information data (SID) is or comprises an image (I) to be displayed as said display information (DI) as said or on said start up screen (StS) or shut down screen (ShS) or as a part thereof.

9. Method according to any one of the preceding claims 9 or 10,
wherein said image (I) to be displayed as said display information (DI) is or is represented by a bit map file.

10. Method according to any one of the preceding claims,
wherein said step (B) of generating said secondary information data (SID) and therefore the content of said display information (DI) and of said image (I) to be displayed are based on predetermined user profile data (UPD) which are one of representative or descriptive for user preferences with respect to said display information (DI) to be displayed in step (C).

11. Method according to any one of the preceding claims,
wherein said step (B) of generating said secondary information data (SID) is performed by involving an existing on-screen display engine (OSD) of said electronic customer device (CD).

12. Method according to any one of the preceding claims,
wherein said step (B) of generating said secondary information data (SID) is performed using one or an arbitrary plurality of information sources of the group consisting of:
- electronic program guide or EPG,
- weather,
- news,
- stocks,
- sports results,
- messages, email, SMS, MMS,
- reminders,
- notes,
- advertisements,
- remote recordings,
- what is on TV,
- daily tip,
- genre tip,
- subscription reminders,
- customer relationship management,
- announcement of firmware updates,
- new devices,
- archived recordings during night, and
- pictures from a user repository.

13. Method according to any one of the preceding claims,
wherein said secondary user information data (SID) and a provided image (I) for said display information (DI) contains one or an arbitrary plurality of the group consisting of:
- electronic program guide (EPG),
- weather,
- news,
- stocks,
- sports results,
- messages, email, SMS, MMS,
- reminders,
- notes,
- advertisements,
- remote recordings,
- what is on TV,
- daily tip,
- genre tip,
- subscription reminders,
- customer relationship management,
- announcement of firmware updates,
- new devices,
- archived recordings during night, and
- pictures from a user repository.

14. Method according to any one of the preceding claims,
wherein said secondary information data (SID) and said image (I) for said display information (DI) are acoustically enhanced by one of containing or by being accompanied by one or an arbitary plurality of sound, music, and speech, which are to be acoustically presented during step (C) of displaying said display information (DI) on said start up screen (StS) and/or said shut down screen (ShS).

15. Method according to any one of the preceding claims,
wherein said secondary information data (SID) is essentially representative for a graphical user interface (GUI) to be displayed after finalizing a start up and before beginning a shut down of the given electronic customer device (CD).

16. Method according to any one of the preceding claims,
wherein in said step (C) of displaying said display information (DI) on said start up screen (StS) said start up screen (StS) is made interactive after finalizing the start up phase of the given electronic customer device (CD).

17. Electronic customer device (CD),
which is adapted and/or arranged and which comprises means in order to realize a method for displaying display information (DI) via a start up screen (StS) and/or via a shut down screen (ShS) of a display means (DM) of said customer device (CD) according to any one of the claims to 16 and the steps thereof.

18. Electronic customer device (CD) according to claim 17,
which is one of the group consisting of:
- a video recorder,
- a DVD player,
- a DVD recorder,
- a TV set or a television receiver,
- a personal digital assistant,
- a digital camera,
- a digital broadcast receiver,
- a satelite receiver,
- a mobile device, e.g. a cell phone,
- a pocket computer, and
- a personal computer.

19. Computer program product,
comprising computer program means which is adapted and/or arranged in order to realize a method for displaying display information (DI) via a start up screen (StS) and/or via a shut down screen (ShS) of a display means (DM) of a customer device (CD) according to any one of the claims 1 to 16 when it is executed on a computer or a digital signal processing means.

20. Computer readable storage medium,
comprising a computer program product according to claim 19.

## Patentansprüche

1. Verfahren zum Anzeigen von Anzeigeinformation (DI) über einen Startbildschirm (StS) und/oder über einen Abschaltbildschirm (ShS) einer Anzeigeeinheit (DM) eines elektronischen Verbrauchergeräts (CD), **gekennzeichnet durch** die folgenden Schritte:
(A) Empfangen von primären Informationsdaten (PID) **durch** ein wenigstens passives Empfangen der primären Informationsdaten (PID) **durch** das elektronische Verbrauchergerät (CD) von einer Datenquelle (DS) außerhalb des elektronischen Verbrauchergerätes (CD),
(B) Erzeugen von sekundären Informationsdaten (SID) aus den primären Informationsdaten (PID), welche beschreibend oder repräsentativ für die anzuzeigende Anzeigeinformation (DI) sind, wobei das Erzeugen aktiv in dem elektronischen Verbrauchergerät (CD) erfolgt, und
(C) Anzeigen wenigstens der Anzeigeinformation (DI) als sekundäre Informationsdaten (SID) oder als eine Ableitung davon auf einem Startbildschirm (StS) und/oder einem Abschaltbildschirm (ShS).

2. Verfahren nach Anspruch 1, wobei der Schritt (A) zum Bereitstellen der primären Informationsdaten (PID) realisiert wird, indem die primären Informationsdaten (PID) von der Datenquelle (DS) an das elektronische Verbrauchergerät (CD) aktiv übertragen oder getrieben werden.

3. Verfahren nach einem der vorangehenden Ansprüche, wobei ein unidirektionaler Kommunikationskanal (CC) in oder für den Schritt (A) zum Bereitstellen der primären Informationsdaten (PID) verwendet wird.

4. Verfahren nach einem der vorangehenden Ansprüche, wobei der Schritt (A) zum Bereitstellen der primären Informationsdaten (PID) in einem oder mehreren der folgenden Umstände ausgeführt wird:
- in einem Bereitschaftsbetrieb des elektronischen Verbrauchergeräts (CD),
- in einem teilweisen oder vollständigen Aufwachmodus des elektronischen Verbrauchergeräts (CD),
- zu wiederholten Zeitpunkten,
- zu voreingestellten Zeitpunkten,
- zu periodisch wiederkehrenden Zeitpunkten, und
- über Nacht.

5. Verfahren nach einem der vorangehenden Ansprüche, wobei der Kommunikationskanal (CC) in oder für den Schritt (A) zum Bereitstellen der primären Informationsdaten (PID) vollständig oder teilweise durch einen oder mehrere der folgenden Umstände realisiert ist:
- terrestrisch,
- über Kabel,
- über Luft oder drahtlos,
- über Satellit,
- über ein Netzwerk,
- über ein Heimnetzwerk, bzw.
- über das Internet.

6. Verfahren nach einem der vorangehenden Ansprüche, wobei der Schritt (B) zum Erzeugen der sekundären Informationsdaten (SID) in einem oder mehreren der folgenden Umstände durchgeführt wird:
- in einem Bereitschaftsmodus des elektronischen Verbrauchergeräts (CD),
- in einem teilweisen oder vollständigen Aufwachmodus des elektronischen Verbrauchergeräts (CD),
- zu wiederholten Zeitpunkten,
- zu voreingestellten Zeitpunkten,
- zu periodisch wiederkehrenden Zeitpunkten, und
- über Nacht.

7. Verfahren nach einem der vorangehenden Ansprüche, wobei der Schritt (B) zum Erzeugen der sekundären Informationsdaten (SID) ein Verfahren zum Erzeugen eines Bildes (I), welches als Anzeigeinformation (DI) als zumindest ein Teil des Startbildschirms (StS) oder des Abschaltbildschirms (ShS) angezeigt werden soll, ist oder aufweist.

8. Verfahren nach einem der vorangehenden Ansprüche, wobei die sekundären Informationsdaten (SID) ein Bild (I) sind oder aufweisen, welches als Anzeigeinformation (DI) als oder auf dem Startbildschirm (StS) oder Abschaltbildschirm (ShS) oder als ein Teil davon angezeigt werden soll.

9. Verfahren nach einem der vorangehenden Ansprüche 9 oder 10, wobei das Bild (I), welches als Anzeigeinformation (DI) angezeigt wird, eine Bitmap-Datei ist oder von einer solchen dargestellt wird.

10. Verfahren nach einem der vorangehenden Ansprüche, wobei der Schritt (B) zum Erzeugen der sekundären Informationsdaten (SID) und somit des Inhalts der Anzeigeinformation (DI) und des Bildes (I), welches dargestellt wird, auf voreingestellte Benutzerprofildaten (UPD) basieren, welche repräsentativ oder beschreibend für Benutzerpräferenzen bezüglich der Anzeigeinformation (DI), welche in dem Schritt (C) dargestellt werden, sind.

11. Verfahren nach einem der vorangehenden Ansprüche, wobei der Schritt (B) zum Erzeugen der sekundären Informationsdaten (SID) unter Einbeziehen eines existierenden Bildschirmanzeigensystems (OSD) des elektronischen Verbrauchergerätes (CD) durchgeführt wird.

12. Verfahren nach einem der vorangehenden Ansprüche, wobei der Schritt (B) zum Erzeugen der sekundären Informationsdaten (SID) durchgeführt wird, indem eine oder mehrere der folgenden Informationsquellen verwendet wird:
- elektronischer Programmführer oder EPG,
- Wetter,
- Nachrichten,
- Aktienkurse,
- Sportergebnisse,
- Nachrichten, E-Mail, SMS, MMS,
- Erinnerungsdienste,
- Notizen,
- Werbung,
- ausgelagerte Aufzeichnungen,
- was im Fernsehen läuft,
- täglicher Tipp,
- Genretipp,
- Abonnementerinnerungen,
- Kundenbeziehungsmanagement,
- Ankündigungen über Firmwareupdates,
- neue Geräte,
- während der Nacht archivierte Aufnahmen, und
- Bilder aus einem Verwahrungsort eines Benutzers.

13. Verfahren nach einem der vorangehenden Ansprüche, wobei die sekundären Benutzerinformationsdaten (SID) und ein bereitgestelltes Bild (I) für die Anzeigeinformation (DI) eines oder mehrere der folgenden Elemente aufweist:
- elektronischer Programmführer oder EPG,
- Wetter,
- Nachrichten,
- Aktienkurse,
- Sportergebnisse,
- Nachrichten, E-Mail, SMS, MMS,
- Erinnerungsdienste,
- Notizen,
- Werbung,
- ausgelagerte Aufzeichnungen,
- was im Fernsehen läuft,
- täglicher Tipp,
- Genretipp,
- Abonnementerinnerungen,
- Kundenbeziehungsmanagement,
- Ankündigungen über Firmwareupdates,
- neue Geräte,
- während der Nacht archivierte Aufnahmen, und
- Bilder aus einem Verwahrungsort eines Benutzers.

14. Verfahren nach einem der vorangehenden Ansprüche, wobei die sekundären Informationsdaten (SID) und das Bild (I) für die Anzeigeinformation (DI) akustisch erweitert sind, indem sie eines oder mehrere der folgenden Elemente sind oder aufweisen: Ton, Musik, Sprache; welche während dem Schritt (C) zum Darstellen der Anzeigeinformation (DI) auf dem Startbildschirm (StS) und/oder dem Abschaltbildschirm (ShS) akustisch dargeboten werden.

15. Verfahren nach einem der vorangehenden Ansprüche, wobei die sekundären Informationsdaten (SID) im Wesentlichen repräsentativ für ein graphisches Benutzerinterface (GUI) sind, welches nach dem Fertigstellen eines Hochfahrens und vor dem Beginnen eines Herunterfahrens des elektronischen Benutzergerätes (CD) dargestellt wird.

16. Verfahren nach einem der vorangehenden Ansprüche, wobei in dem Schritt (C) zum Darstellen der Anzeigeinformation (DI) auf dem Startbildschirm (STS) der Startbildschirm (StS) nach dem Fertigstellen der Hochfahr-Phase des elektronischen Verbrauchergerätes (CD) interaktiv wird.

17. Elektronisches Verbrauchergerät (CD), welches dazu geeignet und/oder eingerichtet ist, und welches Mittel aufweist zum Realisieren eines Verfahrens zum Anzeigen von Anzeigeinformation (DI) über einen Startbildschirm (StS) und/oder über einen Abschaltbildschirm (ShS) einer Anzeigeeinrichtung (DM) des Verbrauchergerätes (CD) nach einem der Ansprüche 1 bis 16 und deren Schritte.

18. Elektronisches Verbrauchergerät (CD) nach Anspruch 17, welches eine der folgenden Vorrichtungen ist:
- ein Videorekorder,
- ein DVD-Spieler,
- ein DVD-Aufnahmegerät,
- ein Fernsehgerät oder ein Fernsehempfänger,
- ein PDA-Minicomputer,
- eine Digitalkamera,
- ein digitaler Radioempfänger,
- ein Satellitenempfänger,
- ein mobiles Gerät, zum Beispiel ein Mobiltelefon,
- ein Taschencomputer, oder
- ein Arbeitsplatzrechner.

19. Rechnerprogrammprodukt mit einer Rechnerprogrammeinrichtung, welche dazu geeignet ist und/oder ausgelegt ist, ein Verfahren zum Anzeigen von Anzeigeinformation (DI) über einen Startbildschirm (StS) und/oder über einen (ShS) einer Anzeigeeinheit (DM) eines Verbrauchergerätes (CD) nach einem der Ansprüche 1 bis 16 zu realisieren, wenn es auf einem Rechner oder auf einem digitalen Signalverarbeitungsgerät ausgeführt wird.

20. Rechnerlesbares Speichermedium mit einem Rechnerprogrammprodukt nach Anspruch 19.

## Revendications

1. Procédé pour afficher une information d'affichage (DI), via un écran de démarrage (StS) et/ou via un écran de coupure (ShS) d'un moyen d'affichage (DM) d'un dispositif client électronique (CD), **caractérisé par** les étapes qui suivent :
(A) réception de données d'information primaire (PID) en recevant au moins passivement lesdites données d'information primaire (PID) au moyen dudit dispositif client électronique (CD) depuis une source de données (DS) externe par rapport audit dispositif client électronique (CD),
(B) génération, à partir desdites données d'information primaire (PID), de données d'information secondaire (SID) qui sont soit descriptives, soit représentatives pour ladite information d'affichage (DI) destinée à être affichée, activement à l'intérieur dudit dispositif client électronique (CD), et
(C) affichage sur un écran de démarrage (StS) et/ou sur un écran de coupure (ShS) d'au moins ladite information d'affichage (DI) en tant que dites données d'information secondaire (SID) ou en tant que leur dérivée.

2. Procédé selon la revendication 1, dans lequel ladite étape (A) de fourniture desdites données d'information primaire (PID) est réalisée en transmettant ou en poussant activement lesdites données d'information primaire (PID) depuis ladite source de données (DS) jusqu'audit dispositif client électronique (CD).

3. Procédé selon l'une quelconque des revendications précédentes, dans lequel un canal de communication unidirectionnel (CC) est utilisé dans ou pour ladite étape (A) de fourniture desdites données d'information primaire (PID).

4. Procédé selon l'une quelconque des revendications précédentes, dans lequel ladite étape (A) de fourniture desdites données d'information primaire (PID) est réalisée lors d'une circonstance ou d'une pluralité arbitraire de circonstances du groupe constitué par :
dans un mode attente dudit dispositif client électronique (CD),
dans un mode réveil partiel ou complet dudit dispositif client électronique (CD),
selon des occurrences temporelles répétées,
selon des occurrences temporelles prédéterminées,
selon des occurrences temporelles périodiques, et
pendant la nuit.

5. Procédé selon l'une quelconque des revendications précédentes, dans lequel ledit canal de communication (CC) au niveau de ou pour ladite étape (A) de fourniture desdites données d'information primaire (PID) est réalisé complètement ou en partie lors d'une circonstance ou d'une pluralité arbitraire de circonstances du groupe constitué par :
de façon terrestre,
via un câble,
par voie hertzienne ou sans fil,
via un satellite,
via un réseau,
via un réseau domestique, et
via l'Internet.

6. Procédé selon l'une quelconque des revendications précédentes, dans lequel ladite étape (B) de génération desdites données d'information secondaire (SID) est réalisée lors d'une circonstance ou d'une pluralité arbitraire de circonstances du groupe constitué par :
dans un mode attente dudit dispositif client électronique (CD),
dans un mode réveil partiel ou complet dudit dispositif client électronique (CD),
selon des occurrences temporelles répétées,
selon des occurrences temporelles prédéterminées,
selon des occurrences temporelles périodiques, et
pendant la nuit.

7. Procédé selon l'une quelconque des revendications précédentes, dans lequel ladite étape (B) de génération desdites données d'information secondaire (SID) est une étape d'un ou constitue un processus de génération d'une image (I) destinée à être affichée en tant que dite information d'affichage (DI) en tant qu'au moins une partie dudit écran de démarrage (StS) ou dudit écran de coupure (ShS).

8. Procédé selon l'une quelconque des revendications précédentes, dans lequel lesdites données d'information secondaire (SID) sont ou constituent une image (I) destinée à être affichée en tant que dite information d'affichage (DI) en tant que dit ou sur ledit écran de démarrage (StS) ou écran de coupure (ShS) ou en tant qu'une partie de cet écran.

9. Procédé selon l'une quelconque des revendications précédentes, dans lequel ladite image (I) destinée à être affichée en tant que dite information d'affichage (DI) est ou est représentée par un fichier de carte de bits ou bitmap.

10. Procédé selon l'une quelconque des revendications précédentes, dans lequel ladite étape (B) de génération desdites données d'information secondaire (SID) et par conséquent, le contenu de ladite information d'affichage (DI) et de ladite image (I) destinée à être affichée sont basés sur des données de profil d'utilisateur prédéterminées (UPD) qui sont soit représentatives, soit descriptives pour des préférences d'utilisateur par rapport à ladite information d'affichage (DI) destinée à être affichée au niveau de l'étape (C).

11. Procédé selon l'une quelconque des revendications précédentes, dans lequel ladite étape (B) de génération desdites données d'information secondaire (SID) est réalisée en mettant en jeu un moteur d'affichage sur écran (OSD) existant dudit dispositif client électronique (CD).

12. Procédé selon l'une quelconque des revendications précédentes, dans lequel ladite étape (B) de génération desdites données d'information secondaire (SID) est réalisée en utilisant une source d'information ou une pluralité arbitraire de sources d'information du groupe constitué par :
un guide de programme électronique ou EPG,
la météo,
les nouvelles,
des cotations boursières,
des résultats de sports,
des messages, un courriel, un SMS, un MMS,
des mémos,
des notes,
des publicités,
des enregistrements à distance,
un contenu de TV,
des conseils quotidiens,
des conseils par genre,
des mémos d'abonnement,
une gestion de relations de clients,
une annonce de mises à jour de microprogrammes,
de nouveaux dispositifs,
des enregistrements archivés pendant la nuit, et
des images provenant d'un stockage d'utilisateur.

13. Procédé selon l'une quelconque des revendications précédentes, dans lequel lesdites données d'information secondaire (SID) et une image fournie (I) pour ladite information d'affichage (DI) contiennent une source d'information ou une pluralité arbitraire de sources d'information du groupe constitué par :
un guide de programme électronique ou EPG,
la météo,
les nouvelles,
des cotations boursières,
des résultats de sports,
des messages, un courriel, un SMS, un MMS,
des mémos,
des notes,
des publicités,
des enregistrements à distance,
un contenu de TV,
des conseils quotidiens,
des conseils par genre,
des mémos d'abonnement,
une gestion de relations de clients,
une annonce de mises à jour de microprogrammes,
de nouveaux dispositifs,
des enregistrements archivés pendant la nuit, et
des images provenant d'un stockage d'utilisateur.

14. Procédé selon l'une quelconque des revendications précédentes, dans lequel lesdites données d'information secondaire (SID) et ladite image (I) pour ladite information d'affichage (DI) sont améliorées acoustiquement soit en faisant en sorte qu'elles contiennent un élément ou une pluralité arbitraire d'éléments que sont un son, une musique et une parole, soit en faisant en sorte qu'elles soient accompagnées par un tel élément ou une telle pluralité arbitraire d'éléments, lesquels éléments doivent être acoustiquement présentés pendant l'étape (C) d'affichage de ladite information d'affichage (DI) sur ledit écran de démarrage (StS) et/ou sur ledit écran de coupure (ShS).

15. Procédé selon l'une quelconque des revendications précédentes, dans lequel lesdites données d'information secondaire (SID) sont essentiellement représentatives pour une interface utilisateur graphique (GUI) pour qu'elles soient affichées après la finalisation d'un démarrage et avant le début d'une coupure du dispositif client électronique (CD) donné.

16. Procédé selon l'une quelconque des revendications précédentes, dans lequel, au niveau de ladite étape (C) d'affichage de ladite information d'affichage (DI) sur ledit écran de démarrage (StS), ledit écran de démarrage (StS) est rendu interactif après finalisation de la phase de démarrage du dispositif client électronique (CD) donné.

17. Dispositif client électronique (CD), lequel est adapté et/ou agencé et comprend un moyen pour réaliser un procédé pour afficher une information d'affichage (DI), via un écran de démarrage (StS) et/ou via un écran de coupure (ShS) dudit moyen d'affichage (DM) dudit dispositif client (CD) selon l'une quelconque des revendications 1 à 16 et ses étapes.

18. Dispositif client électronique (CD) selon la revendication 17, lequel est l'un du groupe constitué par :
un enregistreur vidéo,
un lecteur de DVD,
un enregistreur de DVD,
un poste de TV ou un récepteur de télévision,
un assistant numérique personnel,
une caméra numérique,
un récepteur de diffusion numérique,
un récepteur de satellite,
un dispositif mobile, par exemple un téléphone cellulaire,
un ordinateur de poche, et
un ordinateur personnel.

19. Produit de programme d'ordinateur, comprenant un moyen de programme d'ordinateur qui est adapté et/ou agencé pour réaliser un procédé pour afficher une information d'affichage (DI), via un écran de démarrage (StS) et/ou via un écran de coupure (ShS) d'un moyen d'affichage (DM) d'un dispositif client (CD) selon l'une quelconque des revendications 1 à 16 lorsqu'il est exécuté sur un ordinateur ou sur un moyen de traitement de signal numérique.

20. Support de stockage lisible par ordinateur, comprenant un produit de programme d'ordinateur selon la revendication 19.
